**Europäisches Patentamt**

**European Patent Office**

**Office européen des brevets**

(19)

(11) Veröffentlichungsnummer : **0 112 466**
**B1**

(12) # EUROPÄISCHE PATENTSCHRIFT

(45) Veröffentlichungstag der Patentschrift :
28.05.86

(21) Anmeldenummer : 83110901.2

(22) Anmeldetag : 02.11.83

(51) Int. Cl.⁴ : **C 09 D 11/10, C 08 G 63/46**

(54) **Druckfarbe.**

(30) Priorität : 25.11.82 DE 3243531

(43) Veröffentlichungstag der Anmeldung :
04.07.84 Patentblatt 84/27

(45) Bekanntmachung des Hinweises auf die Patenterteilung : 28.05.86 Patentblatt 86/22

(84) Benannte Vertragsstaaten :
AT BE CH DE FR GB IT LI NL SE

(56) Entgegenhaltungen :
EP-A- 0 042 515
GB-A- 2 077 279

(73) Patentinhaber : BASF Farben + Fasern Aktiengesellschaft
Am Neumarkt 30
D-2000 Hamburg 70 (DE)

(72) Erfinder : Fries, Werner, Dipl.-Chem.Dr.
Normannenweg 1
D-7252 Weil der Stadt (DE)
Erfinder : Klemm, Karl-Wilhelm, Dipl.-Chem.Dr.
Ahornstrasse 12
D-7000 Stuttgart 70 (DE)

(74) Vertreter : Habbel, Hans-Georg, Dipl.-Ing.
Postfach 3429 Am Kanonengraben 11
D-4400 Münster (DE)

## Beschreibung

Die Erfindung betrifft eine Druckfarbe zum Bedrucken von Papier, bestehend aus Pigment, einem mit Fettsäuren mit einer Iodzahl unter 20 modifizierten Alkydharz-Bindemittel und gegebenenfalls weiterem Bindemittel und weiteren üblichen Bestandteilen wie Gleitmitteln, Lösungsmitteln, Verdickungsmitteln und Thixotropierungsmitteln.

Zur Herstellung von Zeitungspapier wird entfärbtes Altpapier in Form eines wäßrigen Preßkuchens mitverwendet. Geeignete Altpapiere sind holzfreies und Illustrationspapier, insbesondere Papier von Büchern, z. B. Telefonbüchern. Die Entfärbung von bedrucktem Altpapier wird auch als Deinking bezeichnet. Die Entfärbbarkeit von bedrucktem Papier hat also an Bedeutung gewonnen, und damit hat das Interesse an Druckfarben, die zu entfärbbaren oder deinkbaren Druckerzeugnissen führen, zugenommen.

Aus der DE-OS 30 23 118 ist eine Druckfarbe bekannt, die als Bindemittel ein mit Ölen, Fettsäuren und/oder Fettalkoholen einer Jodzahl von kleiner als ungefähr 95 modifiziertes Alkydharz enthält. Als Vorteil dieser bekannten Druckfarbe wird eine gute Deinkbarkeit angegeben.

Es hat sich nun gezeigt, daß die in der DE-OS 30 23 118 beschriebene vollständige Entfernung der Druckfarbe beim Deinkverfahren unter Praxisbedingungen nicht erreicht wird. Es ist daher Aufgabe der vorliegenden Erfindung, eine Druckfarbe mit verbesserter Deinkbarkeit anzugeben.

Überraschenderweise wurde gefunden, daß die Deinkbarkeit einer Druckfarbe, die als wesentliches Bindemittel ein mit Fettsäuren modifiziertes Alkydharz enthält, verbessert werden kann, wenn ein Teil der Fettsäuren durch stabilisiertes Kolophonium ersetzt wird.

Gegenstand der Erfindung ist daher eine Druckfarbe der eingangs genannten Art, die dadurch gekennzeichnet ist, daß als Bindemittel ein Alkydharz mit einer Säurezahl unter 13 in einem Anteil von mindestens 40 Gew.-%, bezogen auf den Gesamtgehalt an Bindemittel, enthalten ist, das hergestellt worden ist durch Umsetzung

a) einer Fettsäure mit 6-20 Kohlenstoffatomen oder eines Gemisches derartiger Säuren oder deren Triglyceride,

b) eines Polyols,

c) eines stabilisierten Kolophoniums und

d) einer Dicarbonsäure, wobei der Anteil des stabilisierten Kolophoniums 1 bis 75 Gew.-%, bezogen auf die Summe von Fettsäuren und Kolophonium, beträgt.

In der GB 2 077 279 A sind Druckfarben beschrieben, die als Bindemittelbestandteil auch Alkydharze enthalten, die durch Umsetzung eines Polyols, einer aliphatischen Monocarbonsäure, eines modifizierten Kolophoniums und einer Polycarbonsäure bzw. -anhydrid hergestellt worden sind.

Die in der GB 2 077 279 A offenbarten Druckfarben unterscheiden sich von den erfindungsgemäßen Druckfarben nicht nur in der Säurezahl der Alkydharzkomponente sondern auch darin, daß sie zum Bedrucken von Substraten wie Metall, Holz oder Plastik entwickelt worden sind, auf denen sie nach dem Aufbringen unter Vernetzung des Bindemittels eingebrannt werden und festhaftende, nicht wieder ablösbare Drucke liefern.

Naturbelassenes Kolophonium vernetzt durch Luftsauerstoff. Dabei nimmt es bis zu 10 % seines Eigengewichtes Sauerstoff auf. Stabilisiertes Kolophonium ist dagegen sehr oxidationsstabil. Die Stabilisierung kann auf zwei Wegen erreicht werden.

a) durch Hydrierung ; hierbei unterscheidet man einfache Hydrierung — dabei entsteht die Dihydroabietinsäure- und doppelte Hydrierung, hier entsteht die Tetrahydroabietinsäure.

b) durch thermische Disproportionierung ; es disproportioniert die Abietinsäure in eine Dehydroabietinsäure und eine Dihydroabietinsäure. Beide Produkte sind sehr oxidationsstabil.

Das stabilisierte Kolophonium — hergestellt nach beiden Verfahren — ersetzt nun erfindungsgemäß Teile der nichttrocknenden Fettsäure.

Vorteilhaft sind als Komponente a) Kokosöl und/oder Palmkernöl bzw. die aus diesen gewonnenen Fettsäuren verwendet worden.

Als Polyol sind vorteilhaft Trimethylolpropan, Glycerin und/oder Pentaerythrit verwendet worden.

Bevorzugte Dicarbonsäuren sind Phthalsäure, Isophthalsäure, Adipinsäure, gesättigte dimere Fettsäuren oder Tetrahydrophthalsäure.

Vorteilhaft weist das modifizierte Alkydharz eine OH-Zahl von 50 bis 150 auf.

Als weiteres Bindemittel enthält die Druckfarbe vorteilhaft Kohlenwasserstoffharz in einem Anteil bis zu 60 Gew.-%, bezogen auf den Gesamtgehalt an Bindemittel. Hierdurch wird die Scheuerfestigkeit frisch hergestellter Druckerzeugnisse verbessert, ohne das die Deinkbarkeit wesentlich verschlechtert wird. Außerdem werden das Nebeln und das Emulgieren der Druckfarbe in der Druckmaschine reduziert.

Die Erfindung betrifft auch ein Verfahren zur Herstellung einer Druckfarbe, bei dem Pigment, ein mit Fettsäuren mit einer Iodzahl unter 20 modifiziertes Alkydharzbindemittel und gegebenenfalls weiteres Bindemittel und weitere übliche Bestandteile wie Gleitmittel, Lösungsmittel, Verdickungsmittel und Thixotropierungsmittel mittels einer Dispergiervorrichtung dispergiert werden. Das erfindungsgemäße Verfahren ist dadurch gekennzeichnet, daß zur Herstellung des Alkydharzbindemittels

a) eine Fettsäure mit 6 bis 20 Kohlenstoffatomen oder ein Gemisch derartiger Säuren oder deren Triglyceride,

b) ein Polyol,

c) stabilisiertes Kolophonium und

d) eine Dicarbonsäure miteinander umgesetzt werden,

wobei der Anteil des stabilisierenden Kolophoniums 1 bis 75 Gew.-%, bezogen auf die Summe von Fettsäuren und Kolophonium, beträgt.

Als Komponente a) werden bei dem erfindungsgemäßen Verfahren vorteilhaft Kokosöl und/oder Palmkernöl bzw. die aus diesen gewonnenen Fettsäuren verwendet.

Als Polyol werden Trimethylolpropan, Glycerin und/oder Pentaerythrit bevorzugt, und als Dicarbonsäure werden vorteilhaft Phthalsäure, Isophthalsäure, Adipinsäure, gesättigte dimere Fettsäuren oder Tetrahydrophthalsäure eingesetzt.

Bei der Herstellung der Druckfarbe wird vorteilhaft als weitere Bindemittel ein Kohlenwasserstoffharz in einem Anteil bis zu 60 Gew.-%, bezogen auf den Gesamtgehalt an Bindemittel, mitverwendet.

Die Erfindung betrifft weiterhin die Verwendung der Druckfarbe für Flach-, Hoch- oder Tiefdruck sowie insbesondere die Verwendung einer Druckfarbe, bestehend aus Pigment, einem Alkydharz-Bindemittel, das durch Umsetzung einer Fettsäure mit 6 bis 20 Kohlenstoffatomen und einer Iodzahl unter 20 oder eines Gemisches derartiger Säuren oder deren Triglyceride, eines Polyols, eines stabilisierten Kolophoniums und einer Dicarbonsäure erhalten worden ist, wobei der Anteil des stabilisierten Kolophoniums 1 bis 75 Gew.-%, bezogen auf die Summe von Fettsäuren und Kolophonium, beträgt, gegebenenfalls weiterem Bindemittel und weiteren üblichen Bestandteilen wie Gleitmittel, Lösungsmittel, Verdickungsmittel und Thixotropierungsmittel zur Herstellung deinkbaren Papierdrucken.

Im folgenden wird die Erfindung an Hand von Ausführungsbeispielen näher erläutert.

## Beispiel 1

Herstellung einer Druckfarbe I

Es werden 1.100 Gewichtsteile Kokosfettsäure in einem Reaktor unter schwachem Schutzgasstrom auf 120° erhitzt. Dann werden 400 Gew.-Teile Adipinsäure, 500 Gew.-Teile eines handelsüblichen durch Hydrierung stabilisierten Kolophoniums und 500 Gew.-Teile Pentaerythrit zusammen mit 160 Gew.-Teilen Xylol als Schleppmittel hinzugegeben. Es wird weiter aufgeheizt, bis das Schleppmittel lebhaft destilliert. Bei dieser Temperatur wird die Veresterungsreaktion fortgesetzt, bis eine Säurezahl unter 13 erreicht ist. Danach wird das Xylol im Vakuum abdestilliert.

Das erhaltene Harz wird in einem Mineralöl mit einem Siedebereich von 230 bis 260 °C gelöst, so daß eine 80 %ige Lösung entsteht. Unter Verwendung dieser Lösung wird mittels einer Dreiwalze eine Druckfarbe folgender Zusammensetzung hergestellt :

| | |
|---|---|
| Ruß | 16 Gew.-Teile |
| Polyethylenwachs | 1 Gew.-Teil |
| Kokosfett | 6 Gew.-Teile |
| Alkydharz (80 %ig in Mineralöl) | 66 Gew.-Teile |
| Mineralöl | |
| (Siedebereich 230-260 °C) | 11 Gew.-Teile |

## Beispiel 2

Herstellung einer Druckfarbe II

Nach der gleichen Arbeitsweise wie im Beispiel 1 wird aus folgenden Ausgangsstoffen ein modifiziertes kydharz hergestellt :

| | |
|---|---|
| Kokosöl-Fettsäure | 950 Gew.-Teile |
| Trimethylolpropan | 620 Gew.-Teile |
| Phthalsäureanhydrid | 570 Gew.-Teile |
| Disproportioniertes Kolophonium | 360 Gew.-Teile |
| Xylol (als Schleppmittel) | 160 Gew.-Teile |

Das erhaltene Alkydharz wird ebenfalls 80 %ig in Mineralöl gelöst.

Unter Verwendung dieses Alkydharzes wird mittels einer Dreiwalze eine Druckfarbe folgender Zusammensetzung hergestellt :

| | |
|---|---|
| Ruß | 16 Gew.-Teile |
| Polyethylenwachs | 1 Gew.-Teil |
| Kokosfett | 6 Gew.-Teile |
| Alkydharz (80 %ig in Mineralöl) | 30 Gew.-Teile |
| 1 aromatisches Kohlenwasserstoffharz (60 %ig in Mineralöl) | 36 Gew.-Teile |
| Mineralöl | 11 Gew.-Teile |

Beispiel 3

Herstellung einer Druckfarbe III

Unter einem Stickstoffstrom werden in einem Reaktor 1 000 Gew.-Teile Kokosfett auf 150 °C erhitzt. Bei dieser Temperatur werden 570 Gew.-Teile Trimethylolpropan und 1 Gew.-Teil Lithiumstearat zugeben. Es wird auf 250 °C aufgeheizt und bei dieser Temperatur umgeestert. Nach Abkühlung auf 200 °C werden 379 Gew.-Teile eines vollständig hydrierten Kolophoniums und 550 Gew.-Teile Phthalsäureanhydrid und als Schleppmittel 160 Gew.-Teile Xylol zugegeben. Bei lebhaft destillierendem Schleppmittel wird bis zu einer Säurezahl unter 13 verestert. Hierauf werden das Xylol im Vakuum abdestilliert und das Harz 80 %ig in Mineralöl gelöst.

Es wird unter Verwendung dieses Alkydharzes mittels einer Dreiwalze eine Druckfarbe folgender Zusammensetzung hergestellt :

| | |
|---|---|
| Ruß | 16 Gew.-Teile |
| Polyethylenwachs | 1 Gew.-Teil |
| Kokosfett | 6 Gew.-Teile |
| Alkydharz (80 %ig in Mineralöl) | 30 Gew.-Teile |
| Kohlenwasserstoffharz gem. Beispiel 2 (60 %ig in Mineralöl) | 36 Gew.-Teile |
| Mineralöl | 11 Gew.-Teile |

Durchführung von Druckversuchen und Deinking der Druckerzeugnisse.

Im Offsetdruckverfahren werden unter Verwendung der Druckfarben I, II und III Drucke hergestellt. Als Motiv wird eine Seite eines Telefonbuches gewählt, und es wird auf Telefonbuchpapier beidseitig gedruckt.

Die erhaltenen Druckerzeugnisse werden 144 Stunden bei 60 °C gealtert. Danach werden die Proben dem Normalklima 23 °C/50 % relative Luftfeuchtigkeit angeglichen. Nach Zerkleinerung der Proben werden diese dem Flotations-Deinking-Prozeß unterworfen. Hierbei wird das Papier in einem zweistufigen Prozeß desintegriert und mit einer wäßrigen Lösung von Natriumhydroxid, Wasserglas, Ölsäure und Wasserstoffperoxid behandelt. In einer Flotationszelle wird der aufsteigende Druckfarbenschaum abgetrennt. Aus der zurückbleibenden Suspension werden mittels einer Nutsche Probeblätter hergestellt, die anschließend getrocknet werden. Durch Weißgradmessungen an diesen Probeblättern wird der Grad der Druckfarbenentfernung bestimmt. Hierzu wird der Reflexionsfaktor für eine Schwerpunktwellenlänge von 457 nm gemessen. Die Druckfarbenentfernungs-Meßzahl (DEM) ergibt sich aus Weißgrad-Mittelwerten (WG) der Probeblätter des bedruckten Stoffes (BS), der einer Desintegration ohne Chemiekalienzusatz unterworfen ist, des unbedruckten Stoffes (US), der durch eine Behandlung von unbedruckten Teilen, z. B. Randstreifen, erhalten worden ist und des deinkten Stoffes (DS) nach folgender Formel :

$$\text{DEM (\%)} = \frac{WG_{DS} - WG_{BS} \cdot 100}{WG_{US} - WG_{BS}}$$

Die mit den Druckfarben I, II und III hergestellten Druckerzeugnisse ergeben folgende Werte der Druckfarbenentfernungs-Maßzahl :

| | |
|---|---|
| Druckfarbe I | DEM = 82-90 % |
| Druckfarbe II | DEM = 80-88 % |
| Druckfarbe III | DEM = 80-88 % |

Vergleichsbeispiel

Dem Beispiel 1 a der DE-OS 30 23 118 entsprechend wird aus 1418 Gewichtsteilen Kokosöl, 0,1 Gew.Teil Bleiglätte, 448 Gew.-Teilen Trimethylolpropan, 628 Gew.-Teilen Isophthalsäure und 5,9 Gew.-Teilen p-Toluolsulfonsäure, unter Verwendung von Xylol als Schleppmittel ein Alkydharz-Bindemittel hergestellt. Dieses wird entsprechend dem Beispiel 2 b der DE-OS 30 23 118, unter Verwendung von Polyethylenwachs, phenolmodifiziertem Mineralöl löslichem Kolophoniumharz, Gilsonit-Asphalt und Mineralöl zu einer Druckfarbe verarbeitet.

Unter den gleichen Bedingungen wie in den vorstehend beschriebenen Beispielen werden Druckproben hergestellt und deinkt. Hierbei wird eine Druckfarbenentfernungs- Maßzahl von 71 bis 72 % erreicht.

**Patentansprüche**

1. Druckfarbe zum Bedrucken von Papier, bestehend aus Pigment, einem mit Fettsäuren mit einer

4

ldozahl unter 20 modifizierten Alkydharz-Bindemittel und gegebenenfalls weiterem Bindemittel und weiteren üblichen Bestandteilen wie Gleitmittel, Lösungsmitteln, Verdickungsmitteln und Thixotropierungsmitteln, dadurch gekennzeichnet, daß als Bindemittel ein Alkydharz mit einer Säurezahl unter 13 in einem Anteil von mindestens 40 Gew.-%, bezogen auf den Gesamtgehalt an Bindemitteln, enthalten ist, das hergestellt worden ist durch Umsetzung

a) einer Fettsäure mit 6 bis 20 Kohlenstoffatomen oder eines Gemisches derartiger Säuren oder deren Triglyceride,

b) eines Polyols,

c) eines vorzugsweise durch Hydrierung und/oder thermische Disproportionierung stabilisierten Kolophoniums,

d) einer Dicarbonsäure,

wobei der Anteil des stabilisierten Kolophoniums 1 bis 75 Gew.-% bezogen auf die Summe von Fettsäuren und Kolophonium betragen hat.

2. Druckfarbe nach Anspruch 1, dadurch gekennzeichnet, daß als Komponente a Kokosöl und/oder Palmkernöl bzw. die aus diesen gewonnenen Fettsäuren verwendet worden sind.

3. Druckfarbe nach Anspruch 1 oder 2, dadurch gekennzeichnet, daß als Polyol Trimethylolpropan, Glycerin und/oder Pentaerythrit verwendet worden sind.

4. Druckfarbe nach Anspruch 1 bis 3, dadurch gekennzeichnet, daß als Dicarbonsäure Phthalsäure, Isophthalsäure, Adipinsäure, gesättigte dimere Fettsäuren oder Tetrahydropthalsäure verwendet worden sind.

5. Druckfarbe nach Anspruch 1 bis 4, dadurch gekennzeichnet, daß das modifizierte Alkydharz eine OH-Zahl von 50 bis 150 aufweist.

6. Druckfarbe nach Anspruch 1 bis 5, dadurch gekennzeichnet, daß als weiteres Bindemittel Kohlenwasserstoffharz in einem Anteil bis zu 60 Gew.-%, bezogen auf den Gesamtgehalt an Bindemittel, enthalten ist.

7. Verfahren zur Herstellung einer Druckfarbe zum Bedrucken von Papier, bei dem Pigment, ein mit Fettsäuren mit einer Jodzahl unter 20 modifiziertes Alkydharzbindemittel und gegebenenfalls weiteres Bindemittel und weitere übliche Bestandteile wie Gleitmittel, Lösungsmittel, Verdickungsmittel und Thixotropierungsmittel, mittels einer Dispergiervorrichtung dispergiert werden, dadurch gekennzeichnet, daß als Alkydharzbindemittel ein Alkydharz mit einer Säurezahl unter 13 eingesetzt wird, das hergestellt worden ist durch Umsetzung

a) einer Fettsäure mit 6 bis 20 Kohlenstoffatomen oder eines Gemisches derartiger Säuren oder deren Triglyceride,

b) eines Polyols,

c) eines vorzugsweise durch Hydrierung und/oder thermische Disproportionierung stabilisierten Kolophoniums,

d) einer Dicarbonsäure,

wobei der Anteil des stabilisierten Kolophoniums 1 bis 75 Gew.-% bezogen auf die Summe von Fettsaüren und Kolophonium betragen hat.

8. Verfahren nach Anspruch 7, dadurch gekennzeichnet, daß als Komponente a Kokosöl und/oder Palmkernöl bzw. die aus diesen gewonnenen Festtsäuren verwendet werden.

9. Verfahren nach Anspruch 7 oder 8, dadurch gekennzeichnet, daß als Polyol Trimethylolpropan, Glyzerin und/oder Pentaerythrit verwendet werden.

10. Verfahren nach Anspruch 7 bis 9, dadurch gekennzeichnet, daß als Dicarbonsäure Phthalsäure, Isophthalsäure, Adipinsäure, gesättigte dimere Fettsäuren oder Tetrahydrophthalsäure verwendet werden.

11. Verfahren nach Anspruch 7 bis 10, dadurch gekennzeichnet, daß das modifizierte Alkydharz eine OH-Zahl von 50 bis 150 aufweist.

12. Verfahren nach Anspruch 7 bis 11, dadurch gekennzeichnet, daß als weiteres Bindemittel Kohlenwasserstoffharz in einem Anteil bis zu 60 Gew.-%, bezogen auf den Gesamtgehalt an Bindemittel, verwendet wird.

13. Verwendung der Druckfarbe nach Anspruch 1 bis 6 für Flach-, Hoch- oder Tiefdruck.

14. Verwendung einer Druckfarbe nach den Ansprüchen 1 bis 6 zur Herstellung von deinkbaren Papierdrucken.

**Claims**

1. Printing ink for printing paper, and consisting of pigment, an alkyd resin binder modified with fatty acids having an iodine number of less than 20 and optionally further binders, and further conventional constituents such as lubricants, solvents, thickeners and thixotropic agents, characterized in that the binder present is an alkyd resin having an acid number of less than 13, in a proportion of at least 40 % by weight based on the total content of binders, the resin having been prepared by reacting

a) a fatty acid having 6 to 20 carbon atoms or a mixture of such acids or their triglycerides,

b) a polyol,

c) a colophony which has preferably been stabilised by hydrogenation and/or thermal disproportionation and

d) a dicarboxylic acid,

the proportion of the stabilised colophony having been 1 to 75 % by weight based on the sum of fatty acids and colophony.

2. Printing ink according to Claim 1, characterised in that coconut oil and/or palm kernel oil or the fatty acids obtained from these have been used as component a).

3. Printing ink according to Claim 1 or 2, characterised in that trimethylolpropane, glycerol and/or pentaerythritol have been used as the polyol.

4. Printing ink according to Claims 1 to 3, characterised in that phthalic acid, isophthalic acid, adipic acid, saturated dimeric fatty acids or tetrahydrophthalic acid have been used as the dicarboxylic acid.

5. Printing ink according to Claims 1 to 4, characterised in that the modified alkyd resin has an OH number of 50 to 150.

6. Printing ink according to Claim 1 to 5, characterised in that a hydrocarbon resin is present as a further binder, in a proportion of up to 60 % by weight based on the total content of binders.

7. Process for the preparation of a printing ink for printing paper, wherein a pigment, an alkyd resin binder modified with fatty acids having an iodine number of less than 20 and optionally further binders, and further conventional constituents such as lubricants, solvents, thickeners and thixotropic agents are dispersed by means of a dispersing device, characterised in that the alkyd resin binder is an alkyd resin having an acid number of less than 13, which has been prepared by reacting

a) a fatty acid having 6 to 20 carbon atoms or a mixture of such acids or their triglycerides,

b) a polyol,

c) a colophony which has preferably been stabilised by hydrogenation and/or thermal disproportionation and

d) a dicarboxylic acid,

the proportion of the stabilised colophony having been 1 to 75 % by weight based on the sum of fatty acids and colophony.

8. Process according to Claim 7, characterised in that coconut oil and/or palm kernel oil or the fatty acids obtained from these are used as component a).

9. Process according to Claim 7 or 8, characterised in that trimethylolpropane, glycerol and/or pentaerythritol are used as the polyol.

10. Process according to Claim 7 to 9, characterised in that phthalic acid, isophthalic acid, adipic acid, saturated dimeric fatty acids or tetrahydrophthalic acid are used as the dicarboxylic acid.

11. Process according to Claims 7 to 10, characterised in that the modified alkyd resin has an OH number of 50 to 150.

12. Process according to Claims 7 to 11, characterised in that a hydrocarbon resin is used as a further binder in a proportion of up to 60 % by weight, relative to the total content of binders.

13. Use of the printing ink according to Claim 1 to 6 for planographic printing, relief printing or recess printing.

14. Use of the printing ink according to Claims 1 to 6 for the preparation of deinkable paper prints.

**Revendications**

1. Encre d'impression destinée à l'impression du papier, composée de pigment, d'un liant résine alkyde modifiée par des acides gras possédant un indice d'iode inférieur à 20 et, éventuellement, d'un liant supplémentaire et d'autres constituants habituels tels que des lubrifiants, des solvants, des épaississants et des agents de thioxotropie, caractérisée par le fait qu'elle contient comme liant une résine alkyde possédant un indice d'acide inférieur à 13, dans la proportion d'au moins 40 % en poids de la teneur totale en liant, résine qui a été préparée par la réaction de :

a) un acide gras possédant 6 à 20 atomes de carbone, ou un mélange d'acides gras de ce genre et de leurs triglycérides,

b) un polyol,

c) une colophane stabilisée, et

d) un acide dicarboxylique,

la proportion de la colophane stabilisée représentant 1 à 75 % en poids de la somme des acides gras et de la colophane.

2. Encre d'impression selon la revendication 1, caractérisée en ce qu'on a utilisé, en qualité de composant a), de l'huile de coco et/ou de l'huile de palmiste, ou les acides gras tirés de ces huiles.

3. Encre d'impression selon l'une des revendications 1 et 2, caractérisée en ce qu'on a utilisé, en qualité de polyol, du triméthylolpropane, de la glycérine et/ou de la pentaérythrite.

4. Encre d'impression selon l'une des revendications 1 à 3, caractérisée en ce qu'on a utilisé, en qualité d'acide dicarboxylique, de l'acide phtalique, de l'acide isophtalique, de l'acide adipique, des acides gras dimères saturés et/ou de l'acide tétrahydrophtalique.

5. Encre d'impression selon l'une des revendications 1 à 4, caractérisée en ce que la résine alkyde modifiée présente un indice d'hydroxyle de 50 à 150.

6

6. Encre d'impression selon l'une des revendications 1 à 5, caractérisée en ce qu'elle contient comme liant supplémentaire une résine hydrocarbure, dans une quantité allant jusqu'à 60 % en poids, rapportée à la teneur totale en liant.

7. Procédé de fabrication d'une encre d'impression pour l'impression du papier, dans lequel on disperse au moyen d'un dispositif de dispersion un pigment, un liant résine alkyde modifiée par des acides gras d'un acide d'iode inférieure à 20 et, éventuellement, un liant supplémentaire, ainsi que d'autres constituants habituels tels que des lubrifiants, solvants, épaississants et agents de thixotropie, au moyen d'un dispositif de dispersion, caractérisé en ce que pour la fabrication du liant résine alkyde, on fait réagir entre eux :

a) un acide gras comprenant 6 à 20 atomes de carbone ou un mélange d'acides gras de ce type ou de leurs triglycérides,

b) un polyol,

c) de la colophane stabilisée, et

d) un acide dicarboxylique,

la proportion de la colophane stabilisée représentant de 1 à 75 % en poids, rapportée à la somme des acides gras et de la colophane.

8. Procédé selon la revendication 7, caractérisé en ce qu'on utilise, en qualité de composant a), de l'huile de coco et/ou de l'huile de palmiste, ou les acides gras tirés de ces huiles.

9. Procédé selon la revendication 7, ou la revendication 8, caractérisé en ce qu'on utilise, en qualité de polyol, du triméthylolpropane, de la glycérine et/ou de la pentaérythrite.

10. Procédé selon l'une des revendications 7 à 9, caractérisé en ce qu'on utilise, en qualité d'acide dicarboxylique, de l'acide phtalique, de l'acide isophtalique, de l'acide adipique, des acides gras dimères saturés ou de l'acide tétrahydrophtalique.

11. Procédé selon l'une des revendications 7 à 10, caractérisé en ce que la résine alkyde modifiée possède un indice d'hydroxyle de 50 à 150.

12. Procédé selon l'une des revendications 7 à 11, caractérisé en ce qu'on utilise comme liant supplémentaire une résine hydrocarbure dans une quantité allant jusqu'à 60 % en poids, rapportée à la teneur totale en liant.

13. Utilisation d'une encre d'impression selon l'une des revendications 1 à 6 pour l'impression à plat, en relief ou en creux.

14. Utilisation d'une encre d'impression selon l'une des revendications 1 à 6 pour la fabrication de produits imprimés sur papier désencrables.